# EUROPÄISCHE PATENTSCHRIFT

(11) **EP 4 448 348 B1**
(45) Veröffentlichungstag und Bekanntmachung des Hinweises auf die Patenterteilung: **26.11.2025**
(21) Anmeldenummer: 22826663.1
(22) Anmeldetag: 05.12.2022
(51) Int. Cl.: B60T 7/04, B60T 8/40, B60T 13/14, B60T 13/74, B60T 17/02

(54) **ELEKTROHYDRAULISCHES BREMSENSTEUERGERÄT FÜR EIN KRAFTFAHRZEUG UND BREMSANLAGE**
ELECTROHYDRAULIC BRAKE CONTROL DEVICE FOR A MOTOR VEHICLE, AND BRAKE SYSTEM
DISPOSITIF DE COMMANDE DE FREIN ÉLECTROHYDRAULIQUE POUR UN VÉHICULE AUTOMOBILE, ET SYSTÈME DE FREINAGE

(30) Priorität: 14.12.2021 DE 102021214332
(43) Veröffentlichungstag der Anmeldung: 23.10.2024
(73) Patentinhaber: AUMOVIO Germany GmbH, 60488 Frankfurt am Main (DE)
(72) Erfinder: COURTH, Christian, 30175 Hannover (DE); BILLER, Harald, 30175 Hannover (DE); HITZEL, Michael, 30175 Hannover (DE)
(74) Vertreter: Aumovio Corporation
(86) Internationale Anmeldenummer: PCT/DE2022/200291
(87) Internationale Veröffentlichungsnummer: WO 2023/110032

(56) Entgegenhaltungen:
- DE-A1- 102014 217 428
- DE-A1- 102018 214 564

## Beschreibung

Die Erfindung betrifft ein elektrohydraulisches Bremsensteuergerät gemäß dem Oberbegriff von Anspruch 1 und eine Bremsanlage mit einem solchen Bremsensteuergerät.

Aus der WO 2018/130483 A1 ist eine Bremsanlage mit zwei elektrisch steuerbaren Druckquellen für ein Kraftfahrzeug mit vier hydraulisch betätigbaren Radbremsen bekannt. Die Bremsanlage umfasst neben radindividuellen elektrisch ansteuerbaren Einlass- und Auslassventilen ein elektrisch ansteuerbares Kreistrennventil sowie zumindest weitere drei elektrisch ansteuerbare Ventile. Die genannten Komponenten sind gemeinsam in einem (einzigen) Bremsensteuergerät angeordnet. Weiterhin sind zwei elektronische Steuer- und Regeleinheiten vorgesehen, wobei eine der elektronischen Steuer- und Regeleinheiten die zweite Druckquelle sowie die Einlass- und Auslassventile ansteuert, während die erste Druckquelle sowie alle übrigen Ventile von der anderen elektronische Steuer- und Regeleinheit angesteuert werden.

In der DE 10 2018 222 478 A1 wird eine Bremsanlage offenbart, welche zwei elektrisch steuerbare Druckquellen sowie einen bremspedalbetätigbaren Hauptbremszylinder, radindividuelle elektrisch ansteuerbare Einlass- und Auslassventile, ein elektrisch ansteuerbares Kreistrennventil, ein elektrisch ansteuerbares Pumpenventil für die zweite elektrisch steuerbare Druckquelle sowie ein stromlos geschlossenes Zuschaltventil für die erste elektrisch steuerbare Druckquelle umfasst. Dabei sind die zweite elektrisch steuerbare Druckquelle, das ihr zugeordnete Pumpenventil und die Einlass- und Auslassventile in einer ersten Bremseinheit und der Hauptbremszylinder mit zugeordnetem Fahrertrennventil und Simulator, die erste elektrisch steuerbare Druckquelle, das ihr zugeordnete stromlos geschlossene Zuschaltventil und das Kreistrennventil in einer zweiten Bremseinheit angeordnet.

In der DE 10 2018 214564 A1 wird ein Bremssystem offenbart, mit einem Hauptbremszylinder und einer ersten und einer zweiten Pumpe, welche ausgangsseitig mit Radventilen verbunden sind. Die erste Pumpe ist eingangsseitig mi dem Hauptbremszylinder verbunden und die zweite Pumpe mit dem Reservoir. Die zweite Pumpe kann dadurch Bremsflüssigkeit aus diesem Reservoir ansaugen.

In der DE 10 2014 217428 A1 wird ein Hydraulikaggregat für ein Bremssystem beschrieben, wobei die Zuführleitung eines Radbremszylinders an eine erste Druckkammer eines Hauptbremszylinders angebunden ist und dessen Saugleitungsabschnitt an ein Bremsflüssigkeitsreservoir angebunden ist. Die Zuführleitung und der Saugleitungsabschnitt sind über ein Simulatorventil hydraulisch verbunden, sodass Bremsflüssigkeit von der Zuführleitung in den Saugleitungsabschnitt transferierbar ist. Dadurch kann mittels des Simulatorventils ein in der ersten Druckkammer vorliegender Innendruck reduziert werden.

Es ist eine Aufgabe der vorliegenden Erfindung ein kostengünstiges elektrohydraulisches Bremsensteuergerät für eine verbesserte, für das hochautomatisierte Fahren geeignete Bremsanlage bereitzustellen.

Eine weitere Aufgabe der Erfindung ist es, die Kosten für die Herstellung und den Zusammenbau der Bremsanlage möglichst gering zu halten.

Diese Aufgabe wird erfindungsgemäß durch ein elektrohydraulisches Bremsensteuergerät gemäß Anspruch 1 und eine Bremsanlage gemäß Anspruch 14 gelöst.

Der Erfindung liegt der Gedanke zugrunde, dass das elektrohydraulische Bremsensteuergerät für zumindest vier hydraulisch betätigbare Radbremsen eine elektrisch betätigbare Druckquelle, ein elektrisch betätigbares Einlassventil je Radbremse, ein elektrisch betätigbares Auslassventil je Radbremse und eine Bremsversorgungsleitung umfasst, wobei an die Bremsversorgungsleitung die zumindest vier Einlassventile angeschlossen sind. Ein elektrisch betätigbares Kreistrennventil ist in der Bremsversorgungsleitung derart angeordnet ist, dass bei geschlossenem Kreistrennventil die Bremsversorgungsleitung in einen ersten Leitungsabschnitt und einen zweiten Leitungsabschnitt hydraulisch getrennt wird. Das Bremsensteuergerät umfasst zumindest vier hydraulische Radanschlüsse zur Verbindung mit den zumindest vier hydraulisch betätigbaren Radbremsen. Weiterhin umfasst das Bremsensteuergerät einen ersten hydraulischen Anschluss zur Verbindung mit einem Druckmittelvorratsbehälter und einen zweiten hydraulischen Anschluss zum Anschließen einer weiteren Druckquelle zur Betätigung der zumindest vier Radbremsen an das Bremsensteuergerät Dabei ist der erste Leitungsabschnitt der Bremsversorgungsleitung mit der elektrisch betätigbaren Druckquelle und zumindest zwei der zumindest vier Einlassventile hydraulisch verbunden, und der zweite Leitungsabschnitt der Bremsversorgungsleitung ist mit dem zweiten hydraulischen Anschluss und den anderen der zumindest vier Einlassventilen hydraulisch verbunden.

Somit können die zumindest vier Radbremsen bei geöffnetem Kreistrennventil mittels der elektrisch betätigbaren Druckquelle des Bremsensteuergeräts und/oder mittels der angeschlossenen weiteren Druckquelle betätigt werden. Bei geschlossenem Kreistrennventil können die an den ersten Leitungsabschnitt angeschlossenen zumindest zwei Radbremsen mittels der Druckquelle des Bremsensteuergeräts betätigt werden und die anderen, an den zweiten Leitungsabschnitt angeschlossenen Radbremsen mittels der weiteren Druckquelle betätigt werden.

Das erfindungsgemäße Bremsensteuergerät bietet den Vorteil, dass eine weitere (zweite), insbesondere elektrisch betätigbare, Druckquelle in einem Abstand zu dem Bremsensteuergerät im Kraftfahrzeug angeordnet werden kann, und die zweite Druckquelle und das Bremsensteuergerät durch höchstens ein druckfestes hydraulisches Verbindungselement miteinander verbunden werden müssen, wobei alle Radbremsen durch die zweite Druckquelle und die Druckquelle des Bremsensteuergeräts betätigt werden können.

Bevorzugt handelt es sich bei der weiteren Druckquelle ebenso um eine elektrisch betätigbare Druckquelle.

Bevorzugt umfasst das elektrohydraulisches Bremsensteuergerät ein elektrisch betätigbares Trennventil, welches hydraulisch zwischen dem zweiten hydraulischen Anschluss für die weitere Druckquelle und dem zweiten Leitungsabschnitt der Bremsversorgungsleitung angeordnet ist. Durch Schließen des Trennventils kann, z.B. im Fall einer Leckage in der weiteren (zweiten) Druckquelle, ein Abfließen von Druckmittel von dem Bremsensteuergerät über den zweiten hydraulischen Anschluss in die weitere Druckquelle verhindert werden. Auch kann die weitere Druckquelle mittels des Trennventils hydraulisch von der Bremsversorgungsleitung getrennt werden, z.B. wenn die Bremsanlage in einer Betriebsart betrieben werden soll oder muss (z.B. bei einem elektrischen Ausfall der weiteren Druckquelle), in welcher die zumindest vier Radbremsen mittels der Druckquelle des Bremsensteuergeräts mit Druck beaufschlagt werden.

Besonders bevorzugt ist das Trennventil stromlos offen ausgeführt. So ist keine Ansteuerung des Trennventils nötig, wenn die Radbremsen mittels der weiteren, an den zweiten hydraulischen Anschluss angeschlossenen Druckquelle betätigt werden sollen. Dadurch werden eventuell störende Schaltgeräusche verhindert. Weiterhin wird der Stromverbrauch reduziert. Außerdem wird dadurch gewährleistet, dass das Bremsensteuergerät im ausgeschalteten Zustand mit dem druckfesten hydraulischen Verbindungselement verbunden ist, das bevorzugt in diesem Zustand unter Atmosphärendruck steht.

Besonders bevorzugt ist das Kreistrennventil stromlos offen ausgeführt. So ist keine Ansteuerung des Kreistrennventils nötig, wenn alle Radbremsen mittels derselben Druckquelle (Druckquelle des Bremsensteuergeräts oder weitere Druckquelle) betätigt werden sollen. Dies reduziert den Stromverbrauch der Bremsanlage und vermeidet eventuell störende Ventilschaltgeräusche.

Bevorzugt ist der zweite hydraulische Anschluss des Bremsensteuergeräts für eine druckfeste Verbindung ausgebildet. Zur Betätigung der Radbremsen sind auch die Radanschlüsse des Bremsensteuergeräts für eine druckfeste Verbindung ausgebildet. Der erste hydraulische Anschluss des Bremsensteuergeräts ist bevorzugt für eine nicht-druckfeste (z.B. Atmosphären-) Anbindung ausgebildet.

Bevorzugt wird unter einem druckfesten Verbindungselement bzw. einer druckfesten An-/Verbindung verstanden, dass das Verbindungselement bzw. die An-/Verbindung auf einen maximalen Betriebsdruck einer der Druckquellen, insbesondere der ersten Druckquelle, und/oder der Radbremsen ausgelegt ist. Besonders bevorzugt ist das druckfeste Verbindungselement bzw. die druckfeste An-/Verbindung auf einen Druck von etwa 180-220 bar ausgelegt. Ganz besonders bevorzugt ist das druckfeste Verbindungselement bzw. die druckfeste An-/Verbindung auf einen Druck von etwa 200 bar ausgelegt.

Bevorzugt wird unter einem nicht-druckfesten Verbindungselement bzw. einer nicht-druckfesten An-/Verbindung verstanden, dass das Verbindungselement bzw. die An-/Verbindung nicht auf den maximalen Betriebsdruck der Radbremsen ausgelegt ist. Besonders bevorzugt ist ein nicht-druckfestes Verbindungselement bzw. eine nicht-druckfeste Verbindung auf einen maximalen Druck von etwa 10 bar ausgelegt.

Erfindungsgemäß umfasst das elektrohydraulische Bremsensteuergerät neben den zumindest vier hydraulischen Radanschlüssen, dem ersten hydraulischen Anschluss und dem zweiten hydraulischen Anschluss keinen weiteren hydraulischen Anschluss.

Bevorzugt ist ein Drucksensor an den ersten Leitungsabschnitt angeschlossen, an welchen die Druckquelle angeschlossen ist. Mittels des Drucksensors kann der von der Druckquelle des elektrohydraulischen Bremsensteuergeräts erzeugte Druck gemessen werden. Dies ist vorteilhaft für eine Berstschutz-Überwachung bei aktiver Kreistrennung, also wenn das Kreistrennventil geschlossen ist.

Bevorzugt sind die Auslassventile mit dem ersten hydraulischen Anschluss verbunden. So kann zum Druckabbau in den Radbremsen Druckmittel in den Druckmittelvorratsbehälter abgelassen werden.

Bevorzugt ist die Druckquelle des elektrohydraulischen Bremsensteuergeräts saugseitig mit dem ersten hydraulischen Anschluss verbunden, um Druckmittel aus dem Druckmittelvorratsbehälter ansaugen zu können. Besonders bevorzugt ist die Druckquelle des elektrohydraulischen Bremsensteuergeräts ohne Zwischenschaltung eines elektrisch betätigbaren Ventils mit dem ersten hydraulischen Anschluss verbunden. So kann ein möglichst geringer Ansaugwiderstand für die Druckquelle erzielt werden.

Gemäß einer bevorzugten Weiterbildung des Bremsensteuergeräts ist die Druckquelle zwei- oder mehr-kreisig ausgeführt. Besonders bevorzugt ist die Druckquelle als eine Zwei-Kolben-Pumpe oder eine Mehr-Kolben-Pumpe ausgeführt, welche bereits seit vielen Jahren erfolgreich in konventionellen ESC-Bremsanlagen benutzt werden. Dabei sind die Saugseiten der zwei- oder mehr-kreisigen Druckquelle sind zusammengeschaltet und mit dem ersten hydraulischen Anschluss verbunden.

Bevorzugt sind auch die Druckseiten der zwei- oder mehr-kreisigen Druckquelle zusammengeschaltet und sind mit dem ersten Leitungsabschnitt der Bremsversorgungsleitung verbunden.

Alternativ ist es bevorzugt, dass eine der Druckseiten der zwei- oder mehr-kreisigen Druckquelle mit dem ersten Leitungsabschnitt der Bremsversorgungsleitung verbunden ist und eine andere Druckseite der zwei- oder mehr-kreisigen Druckquelle mit dem zweiten Leitungsabschnitt der Bremsversorgungsleitung verbunden ist.

Bevorzugt ist dem Trennventil ein in Richtung des zweiten Leitungsabschnitts der Bremsversorgungsleitung öffnendes Rückschlagventil parallelgeschaltet, das den Volumenstrom von der weiteren Druckquelle zur Bremsversorgungsleitung verbessert.

Bevorzugt ist dem Trennventil ein elektrisch betätigbares, insbesondere stromlos geschlossenes, weiteres Trennventil parallelgeschaltet ist. So können kostengünstig herstellbare Ventile verwendet werden, zum Beispiel ein großes stromlos geschlossenes Ventil in Parallelschaltung mit einem kleinen stromlos offenen Ventil.

Das elektrohydraulisches Bremsensteuergerät umfasst bevorzugt einen Ventilblock und eine elektronische Steuervorrichtung. Die Druckquelle, die Einlass- und Auslassventile und das Kreistrennventil werden besonders bevorzugt von der elektronischen Steuervorrichtung angesteuert. Besonders bevorzugt wird auch das Trennventil von der elektronischen Steuervorrichtung angesteuert.

Bevorzugt werden die Druckquelle, die zumindest vier Einlass- und die zumindest vier Auslassventile, das Kreistrennventil und das Trennventil ausschließlich von der elektronischen Steuervorrichtung des Bremsensteuergeräts angesteuert.

Bevorzugt ist der erste hydraulische Anschluss des Bremsensteuergeräts über eine hydraulische Verbindungsleitung mit einem Druckmittelvorratsbehälter verbunden. Die hydraulische Verbindungsleitung zwischen dem Bremsensteuergerät und dem Druckmittelvorratsbehälter braucht nicht druckfest ausgeführt zu sein. Die hydraulische Verbindungsleitung zwischen dem Bremsensteuergerät und dem Druckmittelvorratsbehälter besitzt vorteilhafterweise einen größeren Durchmesser als eine druckfeste hydraulische Verbindungselement zwischen dem Bremsensteuergerät und der weiteren Druckquelle.

Die Erfindung betrifft auch eine Bremsanlage mit einem erfindungsgemäßen elektrohydraulischen Bremsensteuergerät und einem zweiten elektrohydraulischen Bremsensteuergerät mit einer weiteren bzw. zweiten elektrisch betätigbaren Druckquelle. Bevorzugt sind das elektrohydraulische Bremsensteuergerät und das zweite elektrohydraulischen Bremsensteuergerät durch höchstens ein druckfestes hydraulisches Verbindungselement miteinander verbunden.

Weitere nicht-druckfeste Verbindungselemente zwischen dem erfindungsgemäßen Bremsensteuergerät und dem zweiten Bremsensteuergerät sind möglich.

Das erfindungsgemäße Bremsensteuergerät und das zweite Bremsensteuergerät sind derart ausgeführt, dass sie durch höchstens ein druckfestes hydraulisches Verbindungselement miteinander verbunden sind. Das Bremsensteuergerät und das zweite Bremsensteuergerät können durch mehrere hydraulische Verbindungselemente miteinander verbunden sein, jedoch ist höchstens eines - im Sinne von nur eines - dieser hydraulischen Verbindungselemente druckfest ausgeführt, nämlich das druckfeste hydraulische Verbindungselement. Eventuelle andere hydraulische Verbindungselemente sind nicht druckfest ausgeführt.

Bevorzugt sind das erfindungsgemäße Bremsensteuergerät und das zweite Bremsensteuergerät durch lediglich ein hydraulisches Verbindungselement miteinander verbunden, wobei dieses Verbindungselement druckfest ausgeführt ist, d.h. das druckfeste hydraulische Verbindungselement ist.

Weitere, nicht-druckfeste Verbindungselemente oder Verbindungen oder Verbindungsleitungen sind möglich. Bevorzugt ist das erfindungsgemäße Bremsensteuergerät mit einem Druckmittelvorratsbehälter über eine nicht-druckfeste hydraulische Verbindungen verbunden. Bevorzugt ist das zweite Bremsensteuergerät mit dem Druckmittelvorratsbehälter über eine nicht-druckfeste hydraulische Verbindungen verbunden.

Bevorzugt ist die zweite elektrisch betätigbare Druckquelle mit einem hydraulischen Anschluss des zweiten elektrohydraulischen Bremsensteuergerät verbunden und der zweite hydraulischen Anschluss des elektrohydraulischen Bremsensteuergeräts ist mit dem hydraulischen Anschluss des zweiten elektrohydraulischen Bremsensteuergerät mittels des druckfesten hydraulischen Verbindungselements verbunden.

Bevorzugt umfasst die Bremsanlage neben der Druckquelle des elektrohydraulischen Bremsensteuergeräts und der zweiten Druckquelle des zweiten elektrohydraulischen Bremsensteuergeräts keine weitere Druckquelle zum Aufbau eines Bremsdruckes zur Betätigung der zumindest vier Radbremsen.

Die Bremsensteuergerät umfasst pro Radbremse ein Einlassventil sowie ein Auslassventil. Je Radbremse ist bevorzugt das Einlassventil hydraulisch zwischen der Bremsversorgungsleitung und dem zugeordneten Radanschluss angeordnet und das Auslassventil hydraulisch zwischen der zugeordneten Radanschluss und dem ersten hydraulischen Anschluss angeordnet. Die Ein- und Auslassventile dienen zum bedarfsweisen Einstellen radindividueller Bremsdrücke, die aus dem Bremsversorgungsdruck in der Bremsversorgungsleitung abgeleitet werden.

Bevorzugt leiten die Einlassventile den Bremsversorgungsdruck im nicht-angesteuerten Zustand zu den Radanschlüssen weiter (d.h. bevorzugt stromlos offene Einlassventile), die Auslassventile sperren im nicht-angesteuerten Zustand ein Abströmen von Druckmittel aus den Radbremsen (d.h. bevorzugt stromlos geschlossene Auslassventile).

Bevorzugt sind die Auslassventile über eine gemeinsame hydraulische Verbindung (sog. Rücklaufleitung) mit dem ersten hydraulischen Anschluss verbunden. Besonders bevorzugt ist die Druckquelle mit ihrem Sauganschluss (Saugseite oder ggf. ihren Saugseiten) mit der Rücklaufleitung bzw. dem ersten hydraulischen Anschluss hydraulisch verbunden. So ist ein einziges nicht-druckfestes Verbindungselement zwischen Bremsensteuergerät und Druckmittelvorratsbehälter möglich.

Der erste Leitungsabschnitt ist mit der Druckquelle und zumindest zwei der zumindest vier Einlassventilen hydraulisch verbunden, bzw. der erste Leitungsabschnitt verbindet die Druckquelle mit zumindest zwei der zumindest vier Einlassventile hydraulisch. Der zweite Leitungsabschnitt ist mit dem zweiten hydraulischen Anschluss bzw. dem Trennventil und den anderen, insbesondere zumindest zwei, der zumindest vier Einlassventilen hydraulisch verbunden, bzw. der zweite Leitungsabschnitt verbindet den zweiten hydraulischen Anschluss bzw. das Trennventil mit den anderen, insbesondere zumindest zwei, der zumindest vier Einlassventile hydraulisch.

Mittels des Kreistrennventils kann die Bremsanlage sozusagen in zwei Bremskreise aufgetrennt oder aufgeteilt werden. Dabei ist in dem einen (ersten) Bremskreis die Druckquelle mit den zumindest zwei der zumindest vier Einlassventile hydraulisch verbunden, und in dem anderen (zweiten) Bremskreis ist die weitere Druckquelle über den zweiten hydraulischen Anschluss, und insbesondere das Trennventil, mit den anderen Einlassventilen der zumindest vier Einlassventile hydraulisch verbunden. In einer kombinierten Betriebsart der Bremsanlage können so die Radbremsen, welche dem ersten Bremskreis zugeordnet sind, mittels der Druckquelle betätigt werden, während die Radbremsen, welche dem zweiten Bremskreis zugeordnet sind, mittels der weiteren Druckquelle betätigt werden.

Bevorzugt sind die Radbremsen eines Bremskreises je einer Fahrzeugachse zugeordnet. Besonders bevorzugt sind die Radbremsen des ersten Bremskreises der Hinterachse und die Radbremsen des zweiten Bremskreises der Vorderachse zugeordnet.

Gemäß einer bevorzugten Weiterbildung der Erfindung umfasst die Bremsanlage eine erste elektronische Steuervorrichtung, welche Teil des elektrohydraulischen Bremsensteuergeräts ist und welche die in dem Bremsensteuergerät angeordneten elektrischen Komponenten (z.B. die Druckquelle, die Einlass- und Auslassventile, das Kreistrennventil und ggf. das Trennventil) ansteuert. Bevorzugt umfasst die Bremsanlage weiter eine zweite elektronische Steuervorrichtung, welche Teil des zweiten elektrohydraulischen Bremsensteuergeräts ist und welche die in dem zweiten Bremsensteuergerät angeordneten elektrischen Komponenten (insbesondere die weitere (bzw. zweite) Druckquelle) ansteuert.

Gemäß einer Weiterbildung der Erfindung umfasst die Bremsanlage eine Betätigungseinheit für einen Fahrzeugführer, wobei keine mechanisch-hydraulische Verbindung von der Betätigungseinheit zu den Radbremsen besteht.

Die erfindungsgemäße Bremsanlage bietet den Vorteil, dass die Anzahl der elektrisch betätigbaren Ventile gering ist. Weiterhin bietet sie den Vorteil, dass die Anzahl der hydraulischen Verbindungen, insbesondere die hydraulischen Verbindungen zwischen den Komponenten bzw. Bremsensteuergeräten der Bremsanlage, gering sind. So kann die Bremsanlage kostengünstig hergestellt und zusammengebaut werden.

Eine Aufteilung in ein erfindungsgemäßes Bremsensteuergerät und eine weitere Druckquelle bzw. ein zweites Bremsensteuergerät mit einer weitere (bzw. zweiten) Druckquelle bietet gegenüber einer Realisierung in nur einem Bremsensteuergerät den Vorteil, dass beide Bremsensteuergeräte jeweils kleiner und leichter und deshalb einfacher zu handhaben sind. Sie können auch einfacher auf vorhandenen Produktionsanlagen hergestellt werden. Andererseits führt bei einer Aufteilung in zwei Bremsensteuergeräten jede hydraulische Verbindung zwischen diesen Bremsensteuergeräten zu erheblichem Aufwand und erheblichen Kosten. Es ist daher besonders vorteilhaft, die Anzahl der hydraulischen Verbindungen möglichst klein zu halten. Es hat sich gezeigt, dass es vorteilhaft ist, die verschiedenen Funktionen von hydraulischen Verbindungen möglichst klar zu trennen. So können Verbindungen, über die Druckmittel angesaugt wird, mit einem möglichst großen Durchmesser ausgeführt werden, damit sie einen möglichst kleinen hydraulischen Widerstand besitzen. Dafür ist es vorteilhaft, wenn erreicht wird, dass solche Verbindungen nicht druckfest sein müssen. Umgekehrt sollten drucktragende Verbindungen keine Ansaugfunktion haben. Dies wird durch das erfindungsgemäße Bremsensteuergerät gewährleistet.

Die Erfindung bietet auch den Vorteil, dass durch die Wahl und Anordnung der elektrisch betätigbaren Ventile in den Bremsensteuergeräten, die zugehörige elektronische Partitionierung und insbesondere die Zuordnung zwischen elektrisch betätigbaren Ventilen und elektronischen Steuervorrichtungen der Bremsensteuergeräte eine klare Trennung der Eigenschaften der hydraulischen Verbindungen ermöglicht wird.

Die Erfindung bietet weiterhin den Vorteil, dass die Bremsanlage auch bei Ausfall einer der beiden redundanten elektrischen Druckquellen, z.B. aufgrund eines Ausfalls der ihr zugeordneten elektrischen Energiequelle oder der ihr zugeordneten elektronischen Steuervorrichtung oder eines mechanischen Fehlers oder einer Leckage in der Druckquelle selbst, die wichtigsten Rest-Bremsfunktionen aufrechterhalten kann.

Die erfindungsgemäße Bremsanlage ist daher besonders zur Realisierung von hochautomatisierten Fahrfunktionen geeignet.

Weitere bevorzugte Ausführungsformen der Erfindung ergeben sich aus den Unteransprüchen und der nachfolgenden Beschreibung anhand von Figuren.

Es zeigen schematisch
- Fig. 1: ein erstes Ausführungsbeispiel einer erfindungsgemäßen Bremsanlage mit einem erstes Ausführungsbeispiel eines erfindungsgemäßen elektrohydraulischen Bremsensteuergeräts,
- Fig. 2: ein zweites Ausführungsbeispiel einer erfindungsgemäßen Bremsanlage mit einem zweiten Ausführungsbeispiel eines erfindungsgemäßen elektrohydraulischen Bremsensteuergeräts, und
- Fig. 3: ein drittes Ausführungsbeispiel einer erfindungsgemäßen Bremsanlage mit einem dritten Ausführungsbeispiel eines erfindungsgemäßen elektrohydraulischen Bremsensteuergeräts.

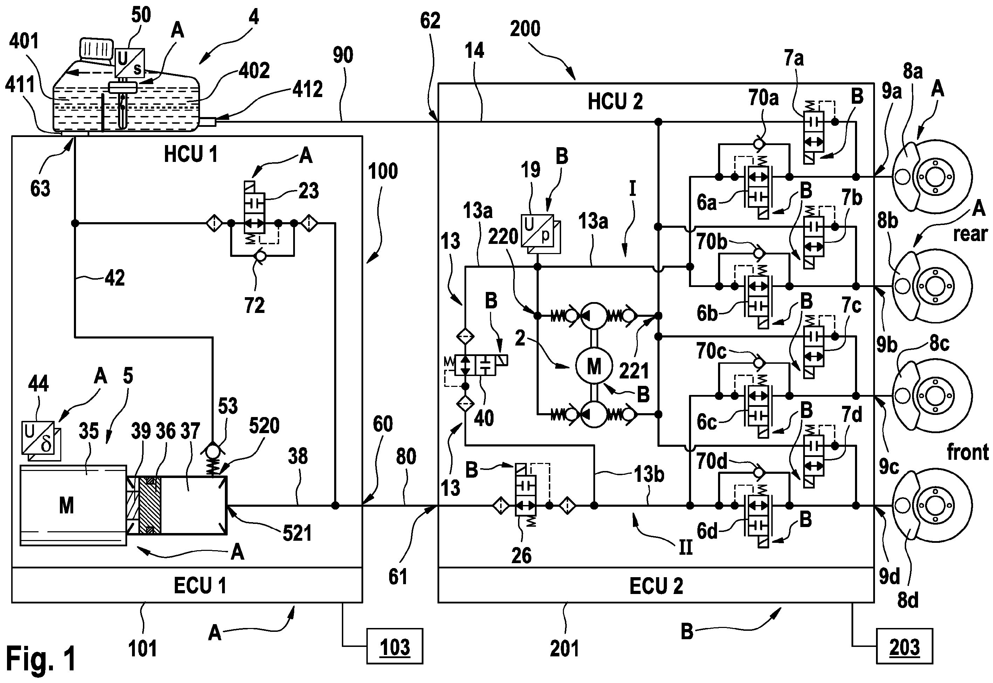

In Fig. 1 ist ein erstes Ausführungsbeispiel einer erfindungsgemäßen Bremsanlage für ein Kraftfahrzeug mit einem erstes Ausführungsbeispiel eines erfindungsgemäßen elektrohydraulischen Bremsensteuergeräts 200 stark schematisch dargestellt. Beispielsgemäß ist die Bremsanlage zur Betätigung von vier hydraulisch betätigbaren Radbremsen 8a-8d ausgebildet, eine Erweiterung auf mehr Radbremsen ist einfach möglich. Beispielsgemäß sind die Radbremsen 8a, 8b der Hinterachse (rear) und die Radbremsen 8c, 8d der Vorderachse (front) des Fahrzeugs zugeordnet.

Die Bremsanlage umfasst eine erste Baueinheit 100 (HECU1), welche beispielsgemäß als ein erstes elektrohydraulisches Bremsensteuergerät mit einem Ventilblock HCU1 und einer ersten elektronischen Steuervorrichtung 101 (ECU1) ausgeführt ist, eine zweite Baueinheit 200 (HECU2), welche beispielsgemäß als ein zweites elektrohydraulisches Bremsensteuergerät mit einem Ventilblock HCU2 und einer zweiten elektronischen Steuervorrichtung 201 (ECU2) ausgeführt ist, und einen Druckmittelvorratsbehälter 4.

Die Begriffe (erste/zweite) Baueinheit und (erstes/zweites) elektrohydraulisches Bremsensteuergerät sind daher im Folgenden bedeutungsgleich zu verstehen.

Der unter Atmosphärendruck stehende Druckmittelvorratsbehälter 4 ist vorteilhafterweise an der ersten Baueinheit 100 angeordnet. Druckmittelvorratsbehälter 4 umfasst beispielsgemäß zwei Kammern, wobei der ersten Kammer 401 ein erster Behälteranschluss 411 zugeordnet ist und der zweiten Kammer 402 ein zweiter Behälteranschluss 412 zugeordnet ist.

In der ersten Baueinheit 100 ist eine erste elektrisch betätigbare Druckquelle 5 angeordnet.

In der zweiten Baueinheit 200 sind eine zweite elektrisch betätigbare Druckquelle 2 sowie radindividuelle Bremsdruckmodulationsventile angeordnet, welche als ein elektrisch betätigbares Einlassventil 6a-6d je Radbremse 8a-8d und ein elektrisch betätigbares Auslassventil 7a-7d je Radbremse 8a-8d ausgeführt sind.

Die erste Druckquelle 5 und die zweite Druckquelle 2 sind druckseitig mit einer Bremsversorgungsleitung 13 verbunden, an welche die vier Einlassventile 6a-6d angeschlossen sind. So können alle vier Radbremsen 8a-8d mittels der ersten Druckquelle 5 oder mittels der zweiten Druckquelle 2 betätigt werden. Die Bremsversorgungsleitung 13 ist in der zweiten Baueinheit 200 angeordnet.

In der Bremsversorgungsleitung 13 ist ein elektrisch betätigbares Kreistrennventil 40 angeordnet, so dass bei geschlossenem Kreistrennventil 40 die Bremsversorgungsleitung 13 in einen ersten Leitungsabschnitt 13a, an welchen die Einlassventile 6a, 6b bzw. die Radbremsen 8a, 8b angeschlossen sind, und einen zweiten Leitungsabschnitt 13b, an welchen die Einlassventile 6c, 6d bzw. die Radbremsen 8c, 8d angeschlossen sind, getrennt wird. Die zweite Druckquelle 2 ist mit dem ersten Leitungsabschnitt 13a hydraulisch verbunden und die erste Druckquelle 5 ist mit dem zweiten Leitungsabschnitt 13b hydraulisch verbunden. Bei geschlossenen Kreistrennventil 40 ist die Bremsanlage somit in zwei hydraulische Bremskreise I und II getrennt oder aufgeteilt. Dabei ist im ersten Bremskreis I die Druckquelle 2 (über den ersten Leitungsabschnitt 13a) mit nur noch den Radbremsen 8a und 8b verbunden, und im zweiten Bremskreis II ist die erste Druckquelle 5 (über den zweiten Leitungsabschnitt 13b) mit nur noch den Radbremsen 8c und 8d verbunden. Das Kreistrennventil 40 ist vorteilhafterweise stromlos offen ausgeführt.

Die Bremsanlage umfasst, wie bereits erwähnt, je hydraulisch betätigbarer Radbremse 8a-8d ein Einlassventil 6a-6d und ein Auslassventil 7a-7d, die paarweise über Mittenanschlüsse hydraulisch zusammengeschaltet und jeweils mit einem hydraulischen Radanschluss 9a-9d der zweiten Baueinheit 200 verbunden sind, an welche die entsprechende Radbremse 8a-8d angeschlossen ist. Den Einlassventilen 6a-6d ist jeweils ein zu der Bremsversorgungsleitung 13 hin öffnendes Rückschlagventil 70a-70d parallelgeschaltet. Die Ausgangsanschlüsse der Auslassventile 7a-7d sind über eine gemeinsame Rücklaufleitung 14 mit einem hydraulischen Anschluss 62 der zweiten Baueinheit 200 verbunden, welcher mit dem Druckmittelvorratsbehälter 4, beispielsgemäß mit dessen zweitem Behälteranschluss 412 bzw. mit dessen Kammer 402, verbunden ist. Die Eingangsanschlüsse aller Einlassventile 6a-6d können mittels der Bremsversorgungsleitung 13 (also bei offenem Kreistrennventil 40) mit einem Druck versorgt werden, der von der ersten Druckquelle 5 oder, z.B. bei Ausfall der ersten Druckquelle 5, von der zweiten Druckquelle 2 bereitgestellt wird.

Die zweite elektrisch steuerbare Druckquelle 2 der zweiten Baueinheit 200 umfasst einen Druckanschluss 220, welcher mit dem ersten Leitungsabschnitt 13a hydraulisch verbunden, und einen Sauganschluss 221, welcher mit dem Druckmittelvorratsbehälter 4, beispielsgemäß über Rücklaufleitung 14 und Anschluss 62, hydraulisch verbunden ist. Anschluss 62, und damit der Sauganschluss (die Saugseite(n)) 221 der Druckquelle 2, ist über eine Leitung oder einen Schlauch 90 mit dem Druckmittelvorratsbehälter 4 direkt verbunden. Diese Verbindung 90 trägt keinen Druck und kann deshalb einen großen Durchmesser haben. Beispielsgemäß ist Anschluss 62 mittels Verbindungsleitung/ Verbindungsschlauch 90 mit dem zweiten Behälteranschluss 412 (und damit der zweiten Kammer 402) des Druckmittelvorratsbehälters 4 hydraulisch verbunden.

Die erste elektrisch steuerbare Druckquelle 5 der ersten Baueinheit ist als eine hydraulische Zylinder-Kolben-Anordnung (bzw. ein einkreisiger elektrohydraulischer Aktuator (Linearaktuator)) ausgebildet, deren Kolben 36 von einem schematisch angedeuteten Elektromotor 35 unter Zwischenschaltung eines ebenfalls schematisch dargestellten Rotations-Translationsgetriebes 39 betätigbar ist, insbesondere vor- und zurückgefahren werden kann, um einen Druck in einem Druckraum 37 auf- und abzubauen. Der Kolben 36 begrenzt den Druckraum 37 der Druckquelle 5. Zur Ansteuerung des Elektromotors ist ein die Rotorlage des Elektromotors 35 erfassender, lediglich schematisch angedeuteter Rotorlagensensor 44 vorgesehen.

An den Druckraum 37 der ersten elektrisch steuerbaren Druckquelle 5 ist ein Systemdruckleitungsabschnitt 38 angeschlossen. Mittels Leitungsabschnitt 38 ist Druckquelle 5 bzw. deren Druckraum 37 hydraulisch mit einem hydraulischen Anschluss 60 der ersten Baueinheit 100 verbunden, welcher über ein hydraulisches Verbindungselement 80 mit einem hydraulischen (Druck)Anschluss 61 der zweiten Baueinheit 200 hydraulisch verbunden ist. Verbindung 80 stellt die einzige hydraulische Druckverbindung, insbesondere die einzige hydraulische Verbindung, zwischen der ersten Baueinheit 100 und der zweiten Baueinheit 200 dar. Es handelt sich dabei um eine hydraulische Verbindung zur Übertragung eines Bremsdrucks zur Betätigung der Radbremsen 8a-8d (daher Druckverbindung). Verbindungselement 80 muss daher druckfest ausgeführt sein, z.B. als ein druckfester Bremsschlauch.

Der hydraulische (Druck)Anschluss 61 der zweiten Baueinheit 200 ist mit dem zweiten Leitungsabschnitt 13b der Bremsversorgungsleitung 13 hydraulisch verbunden.

Druckraum 37 ist beispielsgemäß, unabhängig vom Betätigungszustand des Kolbens 36, über eine in der ersten Baueinheit 100 ausgebildete (Nachsaug)Leitung 42 mit einem hydraulischen Anschluss 63 der ersten Baueinheit 100 hydraulisch verbunden. Anschluss 63 ist hydraulisch mit dem Druckmittelvorratsbehälter 4, beispielsgemäß mit dessen ersten Behälteranschluss 411 und damit dessen erster Kammer 401, verbunden. In der (Nachsaug)Leitung 42 ist ein in Richtung des Druckmittelvorratsbehälters 4 schließendes Rückschlagventil 53 angeordnet. Die beispielsgemäße Druckquelle / Zylinder-Kolben-Anordnung 5 weist beispielsgemäß keine Schnüffellöcher auf.

Weiterhin ist Druckraum 37 beispielsgemäß über den Leitungsabschnitt 38 und ein elektrisch betätigbares, vorteilhafterweise stromlos offen ausgeführtes, zweites Trennventil 23 mit dem hydraulischen Anschluss 63 (sowie der (Nachsaug)Leitung 42) hydraulisch verbunden. Dem zweite Trennventil 23 ist beispielsgemäß ein in Richtung des Druckraums 37 öffnendes Rückschlagventil 72 parallelgeschaltet.

Neben dem (Druckmittelvorratsbehälter-)Anschluss 63 und dem (Druck)Anschluss 60 umfasst die erste Baueinheit 100 beispielsgemäß keinen weiteren hydraulischen Anschluss.

Die zweite elektrisch steuerbare Druckquelle 2 ist beispielsgemäß als eine Zwei-Kolben-Pumpe ausgeführt, sie kann aber auch als eine zwei- oder mehr-kreisige Druckquelle anderer Art ausgeführt sein. Vorteilhafterweise sind die Saugseiten der zwei- oder mehr-kreisige Druckquelle zusammengeschaltet und hydraulisch mit der Rücklaufleitung 14 und somit dem Anschluss 62 bzw. dem Druckmittelvorratsbehälter 4 verbunden.

Die zweite elektrisch steuerbare Druckquelle 2 der zweiten Baueinheit 200 ist beispielsgemäß als eine Zwei-Kolben-Pumpe ausgeführt, deren zwei Druckseiten zusammengeschaltet sind (zum Druckanschluss 220) und deren zwei Saugseiten zusammengeschaltet sind (zum Sauganschluss 221). Sauganschluss 221 (und damit die beiden Saugseiten) der Druckquelle 2 ist hydraulisch mit der Rücklaufleitung 14 und somit dem Anschluss 62 bzw. dem Druckmittelvorratsbehälter 4 verbunden. Druckanschluss 220 (und damit die beiden Druckseiten) der Druckquelle 2 sind mit dem ersten Leitungsabschnitt 13a der Bremsversorgungsleitung 13 verbunden.

Gemäß einer alternativen, nicht dargestellten Ausführungsform sind die Druckseiten der zweiten Druckquelle, z.B. der zwei- oder mehr-kreisigen Druckquelle bzw. der Zwei-Kolben-Pumpe, nicht zusammengeschaltet. Vorteilhafterweise ist eine der Druckseiten der zweiten Druckquelle mit dem ersten Leitungsabschnitt 13a der Bremsversorgungsleitung 13 verbunden und eine andere Druckseite der zweiten Druckquelle ist mit dem zweiten Leitungsabschnitt 13b der Bremsversorgungsleitung 13 verbunden.

Neben der Druckquelle 2 und den Bremsdruckmodulationsventilen 6a-6d, 7a-7d ist in der zweiten Baueinheit 200 bevorzugt ein elektrisch betätigbares, vorteilhafterweise stromlos offenes, Trennventil 26 angeordnet. Trennventil 26 ist hydraulisch zwischen dem Anschluss 61 der zweiten Baueinheit 200 und dem zweiten Leitungsabschnitt 13b der Bremsversorgungsleitung 13 angeordnet. Somit ist die erste Druckquelle 5 über den Anschluss 61 und das Trennventil 26 mit dem zweiten Leitungsabschnitt 13b bzw. der Bremsversorgungsleitung 13 trennbar verbunden.

Die Bremsanlage umfasst beispielsgemäß im Bremskreis I (Leitungsabschnitt 13a) einen Drucksensor 19, welcher somit der zweiten Druckquelle 2 zugeordnet ist. Dies ist vorteilhaft für den Berstschutz bei aktiver Kreistrennung, also wenn das Kreistrennventil 40 geschlossen ist. Drucksensor 19 kann aber auch im Bremskreis II angeordnet sein oder es kann ein zweiter Drucksensor vorgesehen sein, so dass jeder der beiden Bremskreis I und II mittels eines Drucksensors direkt überwacht werden kann.

Beispielsgemäß umfasst die Bremsanlage zur Leckageüberwachung eine Pegelmesseinrichtung 50 zur Bestimmung eines Druckmittel-Pegels in dem Druckmittelvorratsbehälter 4.

Die Baueinheit 200 umfasst somit vier hydraulische Radanschlüsse 9a-9d zur Verbindung mit den Radbremsen 8a-8d, einen hydraulischen Anschluss 62 zur Verbindung mit dem Druckmittelvorratsbehälter 4 und den hydraulischen (Druck)Anschluss 61 zum Anschließen der Druckquelle 5. Anschluss 62 ist vorteilhafterweise nicht-druckfest ausgeführt, während die Radanschlüsse 9a-9d und der Anschluss 61 druckfest ausgeführt sind.

Neben den Radanschlüssen 9a-9d, dem (Druckmittelvorratsbehälter-)Anschluss 62 und dem (Druck)Anschluss 61 umfasst die Baueinheit 200 beispielsgemäß keinen weiteren hydraulischen Anschluss.

Beispielsgemäß sind die Druckquelle 5, das Rückschlagventil 53, das Trennventil 23, das Rückschlagventil 72 sowie die Leitungsabschnitte 38, 42 in der ersten Baueinheit 100 bzw. in dem ersten Ventilblock HCU1 angeordnet.

Druckquelle 2, Einlass- und Auslassventile 6a-6d, 7a-7d, Trennventil 26 sowie die Bremsversorgungsleitung 13 mit dem Kreistrennventil 40 und ihren Leitungsabschnitten 13a, 13b (wie auch die nicht näher bezeichneten Radleitungsabschnitte zwischen den Einlass- und Auslassventilen einerseits und den Radanschlüssen andererseits) sind in der Baueinheit 200 bzw. in dem Ventilblock HCU2 angeordnet. Drucksensor 19 ist ebenfalls in der Baueinheit 200 angeordnet.

Jedem Ventilblock HCU1, HCU2 ist eine elektronische Steuervorrichtung 101, 201 (ECU1, ECU2) zugeordnet. Jede elektronische Steuervorrichtung 101, 201 umfasst elektrische und/oder elektronische Elemente (z.B. Mikrocontroller, Leistungsteile, Ventiltreiber, sonstigen elektronische Bauteile, etc.) zur Ansteuerung der elektrisch betätigbaren Komponenten des zugehörigen Ventilblocks (Baueinheit) und ggf. zur Auswertung der Signale der diesem Ventilblock (Baueinheit) zugeordneten Sensoren. Ventilblock und elektronische Steuervorrichtung sind vorteilhafterweise in bekannter Weise als eine elektrohydraulische Einheit (HECU) / elektrohydraulisches Bremsensteuergerät ausgeführt.

Zur elektrischen Anbindung, Verbindung und Versorgung der einzelnen elektrischen bzw. elektrisch betätigbaren, ansteuerbaren, auswertbaren o.ä. Komponenten der Bremsanlage sind eine erste elektrische Partition A und eine zweite elektrische Partition B vorgesehen, welche elektrisch unabhängig voneinander sind.

In den Figuren sind diejenigen elektrischen Komponenten, welche der ersten elektrischen Partition A zugeordnet sind bzw. dieser angehören, durch einen Pfeil mit A gekennzeichnet, während diejenigen elektrischen Komponenten, welche der zweiten elektrischen Partition B zugeordnet sind bzw. dieser angehören, durch einen Pfeil mit B gekennzeichnet sind.

Die elektronische Steuervorrichtung 101 ist der ersten elektrischen Partition A zugeordnet bzw. gehört dieser an, während die zweite elektronische Steuervorrichtung 201 der zweiten elektrischen Partition B zugeordnet ist bzw. angehört. Entsprechend sind die elektronische Steuervorrichtung 101 und die zweite elektronische Steuervorrichtung 201 elektrisch unabhängig.

Zur Versorgung der Bremsanlage mit elektrischer Energie sind eine erste elektrische Energiequelle 103, z.B. ein Bordnetz, und eine von der ersten Energiequelle unabhängige, zweite elektrische Energiequelle 203, z.B. ein Bordnetz, vorgesehen. Die erste elektrische Energiequelle 103 versorgt die erste elektrische Partition A mit Energie und die zweite elektrische Energiequelle 203 versorgt die zweite elektrische Partition B.

Die erste elektronische Steuervorrichtung 101 steuert die erste Druckquelle 5 an. Entsprechend ist die erste Druckquelle 5 der ersten elektrischen Partition A zugeordnet bzw. zugehörig. Beispielsgemäß wird die erste Druckquelle 5 über die erste elektronische Steuervorrichtung 101 mit Energie (von der ersten elektrischen Energiequelle 103) versorgt.

Die zweite elektronische Steuervorrichtung 201 steuert die zweite Druckquelle 2 an. Entsprechend ist die zweite Druckquelle 2 der zweiten elektrischen Partition B zugeordnet bzw. zugehörig. Beispielsgemäß wird die zweite Druckquelle 2 über die zweite elektronische Steuervorrichtung 201 mit Energie (von der zweiten elektrischen Energiequelle 203) versorgt.

Beispielsgemäß lässt sich bzw. wird die erste Druckquelle 5 ausschließlich durch die erste elektronische Steuervorrichtung 101 und die zweite Druckquelle 2 ausschließlich durch die zweite elektronische Steuervorrichtung 201 ansteuern bzw. angesteuert. Grundsätzlich wäre es denkbar, den Elektromotor einer Druckquelle z.B. mit zwei elektrisch unabhängigen Motorwicklungen auszustatten, so könnte die Druckquelle von den zwei unabhängigen elektrischen Einrichtungen angesteuert werden. Dies wäre jedoch mit weiteren Redundanzen, z.B. zweifachen Verbindungsleitungen etc., verbunden und daher kostenintensiver.

Die übrigen Komponenten der Bremsanlage sind in vorteilhafterweise entweder der ersten elektronischen Steuervorrichtung 101 (Partition A) oder der zweiten elektronischen Steuervorrichtung 201 (Partition B) zugeordnet. D.h. sie werden durch diese Steuervorrichtung angesteuert bzw. betätigt und/oder mit elektrischer Energie versorgt und/oder sind Signalseitig mit dieser Steuervorrichtung verbunden und/oder werden durch diese Steuervorrichtung ausgewertet. Um weitere Redundanzen zu vermeiden, ist vorteilhafterweise eine Komponente lediglich bzw. ausschließlich von einer der beiden elektronischen Steuervorrichtungen 101, 201, nicht aber von der anderen elektronischen Steuervorrichtung, ansteuerbar bzw. betätigbar oder mit elektrischer Energie versorgbar oder signalseitig verbunden oder auswertbar.

Die Einlass- und Auslassventile 6a-6d, 7a-7d sind der zweiten elektrischen Partition B zugeordnet und werden von der zweiten elektronischen Steuervorrichtung 201 angesteuert. Ebenso ist das Kreistrennventil 40 der zweiten elektrischen Partition B zugeordnet und wird von der zweiten elektronischen Steuervorrichtung 201 angesteuert.

Auch das Trennventil 26 zur Abtrennung der Bremsversorgungsleitung 13 bzw. des zweiten Leitungsabschnitts 13b von dem (Druck)Anschluss 61 der Baueinheit 200 (und damit von der ersten Druckquelle 5) ist der zweiten elektrischen Partition B zugeordnet und wird von der zweiten elektronischen Steuervorrichtung 201 angesteuert.

Drucksensor 19 ist ebenso der zweiten elektrischen Partition B zugeordnet. Seine Signale werden der zweiten elektronischen Steuervorrichtung 201 zugeleitet und von dieser ausgewertet und verarbeitet.

Das Trennventil 23 der ersten Baueinheit 100 ist der ersten elektrischen Partition A zugeordnet und wird von der ersten elektronischen Steuervorrichtung 101 angesteuert.

Weiterhin werden der ersten elektronischen Steuervorrichtung 101 die Signale der Pegelmesseinrichtung 50 zugeleitet und von dieser ausgewertet und verarbeitet.

Bevorzugt umfasst die Bremsanlage elektrisch betätigbare Parkbremsen an den Hinterrädern (rear). Diese werden vorteilhafterweise von der ersten elektronischen Steuervorrichtung 101 angesteuert und betätigt, gekennzeichnet durch A an den Radbremsen 8a, 8b in Fig. 1.

Die beispielsgemäße Bremsanlage weist eine primäre Druckquelle 5 und eine sekundäre Druckquelle 2 auf, die von jeweils einer ECU (Electronic Control Unit) elektrisch betrieben werden und einen Sauganschluss und einen Druckanschluss haben. In den Druckanschluss 220 der Sekundärdruckquelle 2 kann auch im stromlosen Zustand keine Bremsflüssigkeit einströmen. Bevorzugt ist die primäre Druckquelle 5 ein Linearaktuator mit Nachsaug-Rückschlagventil 53 und die sekundäre Druckquelle 2 eine Kolbenpumpe. Bevorzugt kann die sekundäre Druckquelle 2 einen höheren Druck als die primäre Druckquelle 5 erzeugen.

Die Sauganschlüsse 221 bzw. 520 der beiden Druckquellen 2 bzw. 5 sind mit einem Druckmittelvorratsbehälter 4 verbunden, bevorzugt jeweils mit einer von zwei getrennten Kammern (402, 401).

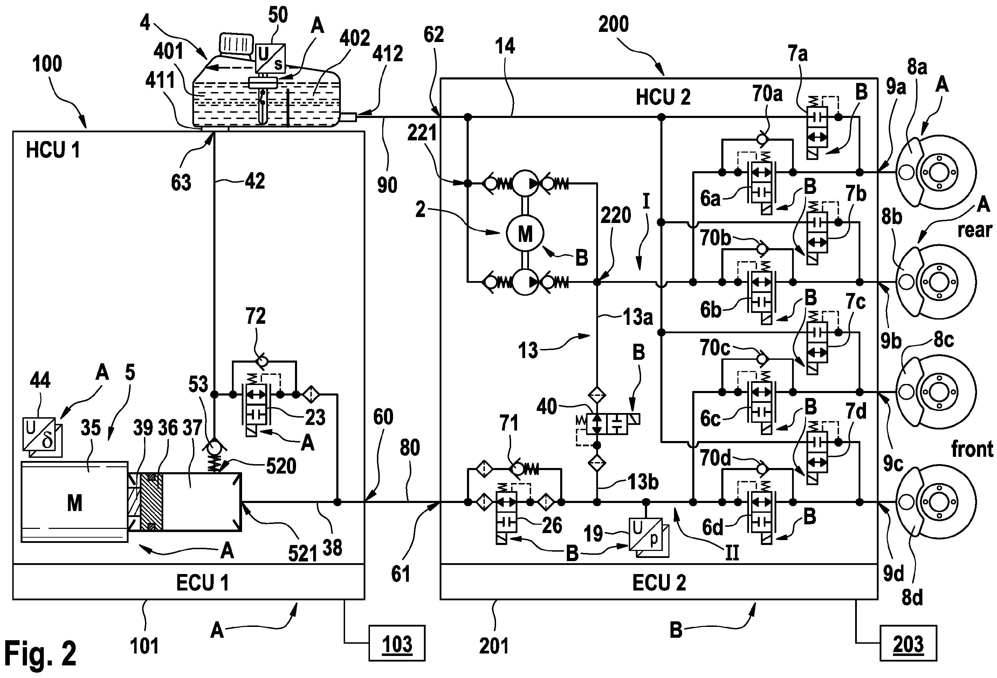

Der Druckanschluss 521 der primären Druckquelle 5 ist über ein elektromagnetisches Ventil 26, auch Druckzuschaltventil genannt, mit einem primären Kreisknoten (zweiter Leitungsabschnitt 13b) verbunden. Dem Ventil 26 kann ein Rückschlagventil 71 parallelgeschaltet sein (siehe z.B. Fig. 2), das einen Volumenstrom von der Primärdruckquelle 5 zum Primärkreisknoten (13b) zulässt.

Der Druckanschluss 220 der sekundären Druckquelle 2 ist direkt (ohne Zwischenschaltung eines Ventils) mit einem sekundären Kreisknoten (ersten Leitungsabschnitt 13a) verbunden.

Die beiden Kreisknoten (Leitungsabschnitte 13a, 13b) sind über ein elektromagnetisches Ventil 40, auch Kreistrennventil genannt, miteinander verbunden.

Die beiden Kreisknoten sind über elektromagnetische Einlassventile 6a-6d mit Radbremsen 8a-8d verbunden, beispielsgemäß der Primärkreisknoten (13b) mit den Radbremsen 8c, 8d der Vorderachse und der Sekundärkreisknoten (13a) mit den Radbremsen 8a, 8b der Hinterachse.

Die Radbremsen 8a-8d sind über elektromagnetische Auslassventile 7a-7d mit dem Druckmittelvorratsbehälter 4 verbunden.

Der Ausgangsanschluss 521 der primären Druckquelle 5 ist über ein elektromagnetisches Ventil 23, auch Druckabbauventil genannt, mit dem Druckmittelvorratsbehälter 4 verbunden.

Bevorzugt sind Ventil 26, Ventil 40 und Ventil 23 stromlos offen ausgeführt.

Im Normalbremsbetrieb der Bremsanlage wird der Druck in den Radbremsen 8a-8d von der Primärdruckquelle 5 bei geschlossenem Trennventil 23 aufgebaut. Abgebaut wird der Druck in die Primärdruckquelle 5 (Zurückfahren des Kolbens 36) oder über das Trennventil 23 in den Druckmittelvorratsbehälter 4.

Von den Einlass- und Auslassventilen 6a-6d, 7a-7d wird der Radbremsdruck bei Bedarf radindividuell moduliert (z.B. bei einer Antiblockierregelung oder sonstigen Bremsregelfunktion). Gegebenenfalls wird das Trennventil 26 geschlossen, damit die Primärdruckquelle 5 zusätzliches Volumen aus dem Druckmittelvorratsbehälter 4 nachsaugen kann.

Wenn ein besonders hoher Volumenstrom benötigt bzw. angefordert wird, arbeiten beide Druckquellen 5 und 2 bevorzugt gleichzeitig parallel. In diesem Fall geschieht der Druckabbau zumindest teilweise über das Trennventil 23, das bevorzugt als Analogventil ausgeführt ist, also seinen Durchfluss steuern kann. Wenn ein besonders hoher Druck angefordert wird, wird bevorzugt das Trennventil 26 geschlossen und die Sekundärdruckquelle 2 erhöht den Druck über den Druck der Primärdruckquelle 5 hinaus.

Außerhalb von Bremsungen ist der atmosphärische Druckausgleich über Trennventil 23 und Trennventil 26 permanent gewährleistet.

Bei einer Leckage in der Bremsanlage wird bevorzugt das Kreistrennventil 40 geschlossen und das System dadurch in zwei unabhängige hydraulische Bremskreise I und II aufgeteilt.

Bevorzugt wird das Trennventil 23 von der primären ECU 101 angesteuert und ist in der ersten Baueinheit 100 angeordnet.

Bevorzugt wird das Trennventil 26 von der sekundären ECU 201 angesteuert und ist in der zweiten Baueinheit 200 angeordnet, in welcher auch die Einlass- und Auslassventile 6a-6d, 7a-7d sowie das Kreistrennventil 40 angeordnet sind, welche ebenso von der sekundären ECU 201 angesteuert werden.

Auf diese Ventilzuordnung bezieht sich die folgende Beschreibung des Betriebs im Fehlerfall.

Wenn das Primärsystem (Baueinheit 100) elektrisch ausfällt, insbesondere die primäre ECU 101 oder ihre Spannungsversorgung 103 (Ausfall der Partition A), schließt die sekundäre ECU 201 das Trennventil 26, um über die Sekundärdruckquelle 2 Druck aufzubauen. Abgebaut wird Druck über das Trennventil 26 oder über die Auslassventile 7a-7d. Bevorzugt werden die Ein- und Auslassventile von der sekundären ECU 201 (Partition B) angesteuert, so dass der Druck radindividuell moduliert werden kann.

Wenn das Sekundärsystem (Baueinheit 200) elektrisch ausfällt, insbesondere die sekundäre ECU 201 oder ihre Spannungsversorgung 203 (Ausfall der Partition B), wird der Druck wie im Normalbetrieb über die primäre Druckquelle 5 und gegebenenfalls das Trennventil 23 auf- und abgebaut. Auf eine radindividuelle Druckregelung muss verzichtet werden, aber eine gemeinsame Modulation der Raddrücke bleibt möglich, um zu verhindern, dass das Fahrzeug durch blockierende Räder destabilisiert wird.

Bevorzugt ist die Zuordnung der Ventile zu den beiden ECUs wie oben beschrieben, das Kreistrennventil 40 wird von der sekundären ECU 201 angesteuert, und das System ist in zwei Baueinheiten 100 und 200 mit zwei hydraulischen Verbindungsleitungen, nämlich das druckfeste Verbindungselement 80 und die drucklose bzw. nicht-druckfeste Verbindungsleitung 90, aufgeteilt. Diese beiden Baueinheiten 100, 200 umfassen bevorzugt jeweils eine der beiden ECUs, die zugeordnete Druckquelle und die zugeordneten Ventile.

In Fig. 2 ist ein zweites Ausführungsbeispiel einer erfindungsgemäßen Bremsanlage mit einem zweiten Ausführungsbeispiel eines erfindungsgemäßen elektrohydraulischen Bremsensteuergeräts 200 schematisch dargestellt. Im Unterschied zum ersten Ausführungsbeispiel der Fig. 1 ist dem Trennventil 26 der zweiten Baueinheit bzw. des zweiten elektrohydraulischen Bremsensteuergeräts 200 ein Rückschlagventil 71 parallelgeschaltet, das einen Volumenstrom von dem Anschluss 61 (damit der Druckquelle 5) zum Leitungsabschnitt 13b zulässt, um den hydraulischen Widerstand des Ventils 26 in Druckaufbaurichtung zu verringern. Weiterhin ist der Drucksensor 19 in Baueinheit 200 an dem Leitungsabschnitt 13b (Bremskreis II) angeordnet.

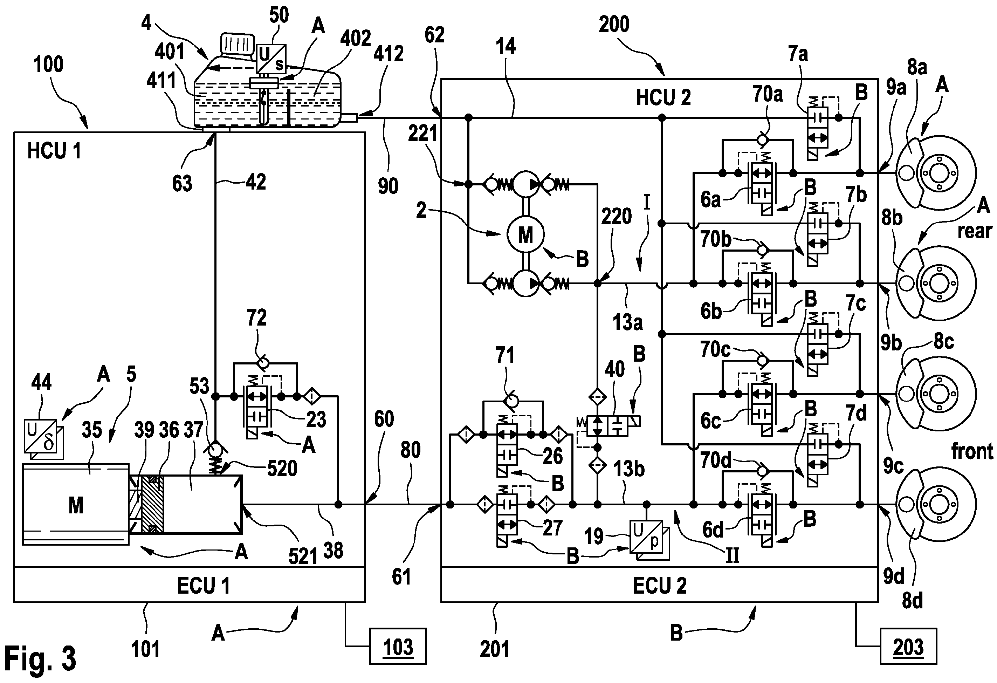

In Fig. 3 ist ein drittes Ausführungsbeispiel einer erfindungsgemäßen Bremsanlage mit einem dritten Ausführungsbeispiel eines erfindungsgemäßen elektrohydraulischen Bremsensteuergeräts 200 schematisch dargestellt. Im Unterschied zum zweiten Ausführungsbeispiel der Fig. 2 ist in der zweiten Baueinheit 200 ein weiteres elektrisch betätigbares Ventil 27 vorgesehen, welches stromlos geschlossen ausgeführt ist. Dieses ist dem Trennventil 26 parallelgeschaltet. Ventil 27 wird von der zweiten elektronischen Steuervorrichtung 201 angesteuert.

Die Aufteilung der beispielsgemäßen Bremsanlagen in zwei Baueinheiten (Bremsensteuergeräten) bietet gegenüber einer Realisierung in nur einer Baueinheit (in nur einem Bremsensteuergerät) den Vorteil, dass beide Baueinheiten jeweils kleiner und leichter und deshalb einfacher zu handhaben sind. Sie können auch einfacher auf vorhandenen Produktionsanlagen hergestellt werden. Bei einer Aufteilung in zwei Baueinheiten führt jede hydraulische Verbindung zwischen diesen Baueinheiten zu Mehraufwand und zusätzlichen Kosten. Es ist daher vorteilhaft, die Anzahl der hydraulischen Verbindungen möglichst klein zu halten. Außerdem ist es vorteilhaft, die verschiedenen Funktionen von hydraulischen Verbindungen möglichst klar zu trennen. Verbindungen, über die Druckmittel angesaugt wird, sollen einen möglichst kleinen hydraulischen Widerstand und deshalb einen möglichst großen Durchmesser haben. Dafür ist es vorteilhaft, wenn erreicht wird, dass solche Verbindungen nicht druckfest sein müssen. Umgekehrt sollten drucktragende Verbindungen keine Ansaugfunktion haben.

Die Wahl und Anordnung der elektrisch betätigbaren Ventile in den zwei Baueinheiten, die elektronische Partitionierung und insbesondere die Zuordnung zwischen elektrisch betätigbaren Ventilen und elektronischen Steuervorrichtungen ermöglichen diese vorteilhaften Eigenschaften der hydraulischen Verbindungen der beiden Baueinheiten. Es ermöglicht, dass die beiden Baueinheiten neben den drucklosen bzw. nicht-druckfesten Verbindungen zum Druckmittelvorratsbehälter nur eine druckfeste Verbindung, die sie hydraulisch untereinander verbindet, benötigen. Die mindestens vier Verbindungen zwischen der zweiten Baueinheit 200 (bzw. den Radanschlüsse (9a-9d)) und den Radbremsen 8a-8d sind ebenfalls druckfeste Verbindungen.

## Patentansprüche

1. Elektrohydraulisches Bremsensteuergerät (200) für ein Kraftfahrzeug für zumindest vier hydraulisch betätigbare Radbremsen (8a-8d) umfassend eine elektrisch betätigbare Druckquelle (2), ein elektrisch betätigbares Einlassventil (6a-6d) je Radbremse, ein elektrisch betätigbares Auslassventil (7a-7d) je Radbremse und eine Bremsversorgungsleitung (13), an welche die zumindest vier Einlassventile (6a-6d) angeschlossen sind, wobei ein elektrisch betätigbares Kreistrennventil (40) in der Bremsversorgungsleitung (13) derart angeordnet ist, dass bei geschlossenem Kreistrennventil (40) die Bremsversorgungsleitung (13) in einen ersten Leitungsabschnitt (13a) und einen zweiten Leitungsabschnitt (13b) hydraulisch getrennt wird, wobei das Bremsensteuergerät (200) zumindest vier hydraulische Radanschlüsse (9a-9d) zur Verbindung mit den zumindest vier hydraulisch betätigbaren Radbremsen (8a-8d) umfasst, wobei das Bremsensteuergerät (200) einen ersten hydraulischen Anschluss (62) zur Verbindung mit einem Druckmittelvorratsbehälter (4) und einen zweiten hydraulischen Anschluss (61) zum Anschließen einer weiteren Druckquelle (5) an das Bremsensteuergerät (200) umfasst, wobei der erste Leitungsabschnitt (13a) der Bremsversorgungsleitung (13) mit der elektrisch betätigbaren Druckquelle (2) und zumindest zwei der zumindest vier Einlassventilen (6a, 6b) hydraulisch verbunden ist, und der zweite Leitungsabschnitt (13b) der Bremsversorgungsleitung (13) mit dem zweiten hydraulischen Anschluss (61) und den anderen der zumindest vier Einlassventilen (6c, 6d) hydraulisch verbunden ist, **dadurch gekennzeichnet, dass** das elektrohydraulische Bremsensteuergerät (200) neben den zumindest vier hydraulischen Radanschlüssen (9a-9d), dem ersten hydraulischen Anschluss (62) und dem zweiten hydraulischen Anschluss (61) keinen weiteren hydraulischen Anschluss umfasst.

2. Elektrohydraulisches Bremsensteuergerät (200) nach Anspruch 1, **dadurch gekennzeichnet, dass** dieses ein elektrisch betätigbares Trennventil (26) umfasst, welches hydraulisch zwischen dem zweiten hydraulischen Anschluss (61) und dem zweiten Leitungsabschnitt (13b) der Bremsversorgungsleitung (13) angeordnet ist.

3. Elektrohydraulisches Bremsensteuergerät (200) nach Anspruch 2, **dadurch gekennzeichnet, dass** das Trennventil (26) stromlos offen ausgeführt ist.

4. Elektrohydraulisches Bremsensteuergerät (200) nach einem der vorhergehenden Ansprüche, **dadurch gekennzeichnet, dass** das Kreistrennventil (40) stromlos offen ausgeführt ist.

5. Elektrohydraulisches Bremsensteuergerät (200) nach einem der vorhergehenden Ansprüche, **dadurch gekennzeichnet, dass** ein Drucksensor (19) an den ersten Leitungsabschnitt (13a) angeschlossen ist, an welchen die Druckquelle (2) angeschlossen ist, und mittels welchem der von der Druckquelle erzeugte Druck gemessen werden kann.

6. Elektrohydraulisches Bremsensteuergerät (200) nach einem der vorhergehenden Ansprüche, **dadurch gekennzeichnet, dass** die zumindest vier elektrisch betätigbaren Auslassventile (7a-7d) mit dem ersten hydraulischen Anschluss (62) verbunden sind.

7. Elektrohydraulisches Bremsensteuergerät (200) nach einem der vorhergehenden Ansprüche, **dadurch gekennzeichnet, dass** die Druckquelle (2) saugseitig, insbesondere ohne Zwischenschaltung eines elektrisch betätigbaren Ventils, mit dem ersten hydraulischen Anschluss (62) verbunden ist.

8. Elektrohydraulisches Bremsensteuergerät (200) nach einem der vorhergehenden Ansprüche, **dadurch gekennzeichnet, dass** die Druckquelle (2) zwei- oder mehr-kreisig ausgeführt ist, insbesondere als eine Zwei-Kolben-Pumpe oder eine Mehr-Kolben-Pumpe ausgeführt ist, wobei die Saugseiten der zwei- oder mehr-kreisigen Druckquelle zusammengeschaltet sind und mit dem ersten hydraulischen Anschluss (62) verbunden sind.

9. Elektrohydraulisches Bremsensteuergerät (200) nach einem der vorhergehenden Ansprüche, **dadurch gekennzeichnet, dass** dem Trennventil (26) ein in Richtung der Bremsversorgungsleitung (13) öffnendes Rückschlagventil (71) parallelgeschaltet ist.

10. Elektrohydraulisches Bremsensteuergerät (200) nach einem der vorhergehenden Ansprüche, **dadurch gekennzeichnet, dass** dem Trennventil (26) ein elektrisch betätigbares, insbesondere stromlos offenes, weiteres Trennventil (27) parallelgeschaltet ist.

11. Elektrohydraulisches Bremsensteuergerät (200) nach einem der vorhergehenden Ansprüche, **dadurch gekennzeichnet, dass** dieses einen Ventilblock (HCU2) und eine elektronische Steuervorrichtung (201) umfasst.

12. Elektrohydraulisches Bremsensteuergerät (200) nach Anspruch 11, **dadurch gekennzeichnet, dass** die Druckquelle (2), die zumindest vier Einlass- und die zumindest vier Auslassventile (6a-6d, 7a-7d) und das Kreistrennventil (40) von der elektronischen Steuervorrichtung (201) angesteuert werden.

13. Elektrohydraulisches Bremsensteuergerät (200) nach Anspruch 12, rückbezogen auf Anspruch 2, **dadurch gekennzeichnet, dass** das Trennventil (26) von der elektronischen Steuervorrichtung (201) angesteuert wird.

14. Bremsanlage mit einem elektrohydraulischen Bremsensteuergerät (200) gemäß einem der Ansprüche 1 bis 13 und einem zweiten elektrohydraulischen Bremsensteuergerät (100) mit einer zweiten elektrisch betätigbare Druckquelle (5), wobei das elektrohydraulische Bremsensteuergerät (200) und das zweite elektrohydraulischen Bremsensteuergerät (100) durch höchstens ein druckfestes hydraulisches Verbindungselement (80) miteinander verbunden sind.

15. Bremsanlage nach Anspruch 14, **dadurch gekennzeichnet, dass** die zweite elektrisch betätigbare Druckquelle (5) mit einem hydraulischen Anschluss (60) des zweiten elektrohydraulischen Bremsensteuergerät (100) verbunden ist und dass der zweite hydraulischen Anschluss (61) des elektrohydraulischen Bremsensteuergerät (200) mit dem hydraulischen Anschluss (60) des zweiten elektrohydraulischen Bremsensteuergerät (100) mittels des druckfesten hydraulischen Verbindungselements (80) verbunden ist.

16. Bremsanlage nach Anspruch 14 oder 15, **dadurch gekennzeichnet, dass** diese neben der Druckquelle (2) des elektrohydraulischen Bremsensteuergeräts (200) und der zweiten Druckquelle (5) des zweiten elektrohydraulischen Bremsensteuergeräts (100) kein weitere Druckquelle zum Aufbau eines Bremsdruckes zur Betätigung der zumindest vier Radbremsen umfasst.

## Claims

1. An electrohydraulic brake control device (200) for a motor vehicle for at least four hydraulically actuatable wheel brakes (8a-8d), comprising an electrically actuatable pressure source (2), an electrically actuatable inlet valve (6a-6d) for each wheel brake, an electrically actuatable outlet valve (7a-7d) for each wheel brake, and a brake supply line (13), to which the at least four inlet valves (6a-6d) are connected, wherein an electrically actuatable circuit separation valve (40) is arranged in the brake supply line (13) in such a way that, when the circuit separation valve (40) is closed, the brake supply line (13) is hydraulically separated into a first line section (13a) and a second line section (13b), wherein the brake control device (200) comprises at least four hydraulic wheel ports (9a-9d) for connection to the at least four hydraulically actuatable wheel brakes (8a-8d), wherein the brake control device (200) comprises a first hydraulic port (62) for connection to a pressure medium reservoir (4) and a second hydraulic port (61) for connecting a further pressure source (5) to the brake control device (200), wherein the first line section (13a) of the brake supply line (13) is hydraulically connected to the electrically actuatable pressure source (2) and at least two of the at least four inlet valves (6a, 6b), and the second line section (13b) of the brake supply line (13) is hydraulically connected to the second hydraulic port (61) and the others of the at least four inlet valves (6c, 6d), **characterized in that** the electrohydraulic brake control device (200) comprises no further hydraulic port in addition to the at least four hydraulic wheel ports (9a-9d), the first hydraulic port (62) and the second hydraulic port (61).

2. The electrohydraulic brake control device (200) as claimed in claim 1, **characterized in that** it comprises an electrically actuatable separation valve (26), which is arranged hydraulically between the second hydraulic port (61) and the second line section (13b) of the brake supply line (13).

3. The electrohydraulic brake control device (200) as claimed in claim 2, **characterized in that** the separation valve (26) is configured to be normally open.

4. The electrohydraulic brake control device (200) as claimed in one of the preceding claims, **characterized in that** the circuit separation valve (40) is configured to be normally open.

5. The electrohydraulic brake control device (200) as claimed in one of the preceding claims, **characterized in that** a pressure sensor (19) is connected to the first line section (13a) to which the pressure source (2) is connected and by means of which the pressure generated by the pressure source can be measured.

6. The electrohydraulic brake control device (200) as claimed in one of the preceding claims, **characterized in that** the at least four electrically actuatable outlet valves (7a-7d) are connected to the first hydraulic port (62).

7. The electrohydraulic brake control device (200) as claimed in one of the preceding claims, **characterized in that** the pressure source (2) is connected to the first hydraulic port (62) on the suction side, in particular without the interposition of an electrically actuatable valve.

8. The electrohydraulic brake control device (200) as claimed in one of the preceding claims, **characterized in that** the pressure source (2) is configured with two or more circuits, in particular is configured as a two-piston pump or a multi-piston pump, wherein the suction sides of the two- or multi-circuit pressure source are interconnected to one another and are connected to the first hydraulic port (62).

9. The electrohydraulic brake control device (200) as claimed in one of the preceding claims, **characterized in that** a check valve (71) which opens in the direction of the brake supply line (13) is connected in parallel with the separation valve (26).

10. The electrohydraulic brake control device (200) as claimed in one of the preceding claims, **characterized in that** an electrically actuatable, in particular normally open, further separation valve (27) is connected in parallel with the separation valve (26).

11. The electrohydraulic brake control device (200) as claimed in one of the preceding claims, **characterized in that** it comprises a valve block (HCU2) and an electronic control device (201).

12. The electrohydraulic brake control device (200) as claimed in claim 11, **characterized in that** the pressure source (2), the at least four inlet and the at least four outlet valves (6a-6d, 7a-7d) and the circuit separation valve (40) are driven by the electronic control device (201).

13. The electrohydraulic brake control device (200) as claimed in claim 12, when dependent on claim 2, **characterized in that** the separation valve (26) is driven by the electronic control device (201).

14. A brake system comprising an electrohydraulic brake control device (200) as claimed in one of claims 1 to 13 and a second electrohydraulic brake control device (100) having a second electrically actuatable pressure source (5), wherein the electrohydraulic brake control device (200) and the second electrohydraulic brake control device (100) are connected to one another by at most one pressure-resistant hydraulic connecting element (80).

15. The brake system as claimed in claim 14, **characterized in that** the second electrically actuatable pressure source (5) is connected to a hydraulic port (60) of the second electrohydraulic brake control device (100), and **in that** the second hydraulic port (61) of the electrohydraulic brake control device (200) is connected to the hydraulic port (60) of the second electrohydraulic brake control device (100) by means of the pressure-resistant hydraulic connecting element (80).

16. The brake system as claimed in claim 14 or 15, **characterized in that** it comprises no further pressure source for building up a brake pressure for actuating the at least four wheel brakes in addition to the pressure source (2) of the electrohydraulic brake control device (200) and the second pressure source (5) of the second electrohydraulic brake control device (100).

## Revendications

1. Dispositif de commande de frein électrohydraulique (200) pour véhicule automobile pour au moins quatre freins de roue à actionnement hydraulique (8a-8d) comprenant une source de pression à actionnement électrique (2), une soupape d'entrée à actionnement électrique (6a-6d) pour chaque frein de roue, une soupape de sortie à actionnement électrique (7a-7d) pour chaque frein de roue et une conduite d'alimentation de frein (13) à laquelle sont raccordées les au moins quatre soupapes d'entrée (6a-6d), dans lequel une soupape de séparation de circuit à actionnement électrique (40) est disposée dans la conduite d'alimentation de frein (13) de sorte que, lorsque la soupape de séparation de circuit (40) est fermée, la conduite d'alimentation de frein (13) est séparée hydrauliquement en une première section de conduite (13a) et une seconde section de conduite (13b), dans lequel le dispositif de commande de frein (200) comprend au moins quatre raccords de roue hydrauliques (9a-9d) pour la liaison avec les au moins quatre freins de roue à actionnement hydraulique (8a-8d), dans lequel le dispositif de commande de frein (200) comprend un premier raccord hydraulique (62) pour la liaison avec un réservoir de fluide sous pression (4) et un second raccord hydraulique (61) pour raccorder une autre source de pression (5) au dispositif de commande de frein (200), dans lequel la première section de conduite (13a) de la conduite d'alimentation de frein (13) est reliée hydrauliquement à la source de pression (2) à actionnement électrique et à au moins deux des au moins quatre soupapes d'entrée (6a, 6b), et la seconde section de conduite (13b) de la conduite d'alimentation de frein (13) est reliée hydrauliquement au second raccord hydraulique (61) et aux autres des au moins quatre soupapes d'entrée (6c, 6d), **caractérisé en ce que** le dispositif de commande de frein électrohydraulique (200) ne comprend aucun autre raccord hydraulique en plus des au moins quatre raccords de roue hydrauliques (9a-9d), du premier raccord hydraulique (62) et du second raccord hydraulique (61).

2. Dispositif de commande de frein électrohydraulique (200) selon la revendication 1, **caractérisé en ce qu'**il comprend une soupape de séparation (26) à actionnement électrique, laquelle est disposée hydrauliquement entre le second raccord hydraulique (61) et la seconde partie de conduite (13b) de la conduite d'alimentation de frein (13).

3. Dispositif de commande de frein électrohydraulique (200) selon la revendication 2, **caractérisé en ce que** la soupape de séparation (26) est réalisée de manière à être ouverte en l'absence de courant.

4. Dispositif de commande de frein électrohydraulique (200) selon l'une quelconque des revendications précédentes, **caractérisé en ce que** la soupape de séparation de circuit (40) est réalisée de manière à être ouverte en l'absence de courant.

5. Dispositif de commande de frein électrohydraulique (200) selon l'une quelconque des revendications précédentes, **caractérisé en ce qu'**un capteur de pression (19) est raccordé à la première section de conduite (13a) à laquelle est raccordée la source de pression (2) et au moyen de laquelle la pression générée par la source de pression peut être mesurée.

6. Dispositif de commande de frein électrohydraulique (200) selon l'une quelconque des revendications précédentes, **caractérisé en ce que** les au moins quatre soupapes de sortie à actionnement électrique (7a-7d) sont reliées au premier raccord hydraulique (62).

7. Dispositif de commande de frein électrohydraulique (200) selon l'une quelconque des revendications précédentes, **caractérisé en ce que** la source de pression (2) est reliée, du côté aspiration, en particulier sans interposition d'une soupape à actionnement électrique, au premier raccord hydraulique (62).

8. Dispositif de commande de frein électrohydraulique (200) selon l'une quelconque des revendications précédentes, **caractérisé en ce que** la source de pression (2) est réalisée en deux circuits ou plus, en particulier en tant que pompe à deux pistons ou pompe à plusieurs pistons, dans lequel les côtés aspiration de la source de pression à deux circuits ou plus sont interconnectés et reliés au premier raccord hydraulique (62).

9. Dispositif de commande de frein électrohydraulique (200) selon l'une quelconque des revendications précédentes, **caractérisé en ce qu'**un clapet antiretour (71) s'ouvrant en direction de la conduite d'alimentation de frein (13) est monté en parallèle avec la soupape de séparation (26).

10. Dispositif de commande de frein électrohydraulique (200) selon l'une quelconque des revendications précédentes, **caractérisé en ce qu'**une autre soupape de séparation (27) à actionnement électrique, en particulier ouverte en l'absence de courant, est montée en parallèle avec la soupape de séparation (26).

11. Dispositif de commande de frein électrohydraulique (200) selon l'une quelconque des revendications précédentes, **caractérisé en ce qu'**il comprend un bloc de soupapes (HCU2) et un dispositif électronique de commande (201).

12. Dispositif de commande de frein électrohydraulique (200) selon la revendication 11, **caractérisé en ce que** la source de pression (2), les au moins quatre soupapes d'entrée et les au moins quatre soupapes de sortie (6a-6d, 7a-7d) et la soupape de séparation de circuit (40) sont commandées par le dispositif électronique de commande (201).

13. Dispositif de commande de frein électrohydraulique (200) selon la revendication 12 lorsqu'elle dépend de la revendication 2, **caractérisé en ce que** la soupape de séparation (26) est commandée par le dispositif électronique de commande (201).

14. Système de freinage comportant un dispositif de commande de frein électrohydraulique (200) selon l'une quelconque des revendications 1 à 13 et un second dispositif de commande de frein électrohydraulique (100) comportant une seconde source de pression à actionnement électrique (5), dans lequel le dispositif de commande de frein électrohydraulique (200) et le second dispositif de commande de frein électrohydraulique (100) sont reliés entre eux par maximum un élément de liaison hydraulique résistant à la pression (80).

15. Système de freinage selon la revendication 14, **caractérisé en ce que** la seconde source de pression à actionnement électrique (5) est reliée à un raccord hydraulique (60) du second dispositif de commande de frein électrohydraulique (100) et **en ce que** le second raccord hydraulique (61) du dispositif de commande de frein électrohydraulique (200) est relié au raccord hydraulique (60) du second dispositif de commande de frein électrohydraulique (100) au moyen de l'élément de liaison hydraulique résistant à la pression (80).

16. Système de freinage selon la revendication 14 ou 15, **caractérisé en ce qu'**il ne comprend pas, en plus de la source de pression (2) du dispositif de commande de frein électrohydraulique (200) et de la seconde source de pression (5) du second dispositif de commande de frein électrohydraulique (100), d'autre source de pression pour établir une pression de freinage pour l'actionnement des au moins quatre freins de roue.
